# DEMANDE DE BREVET EUROPEEN

(11) **EP 1 886 982 A1**
(43) Date de publication de la demande: **13.02.2008**
(21) Numéro de dépôt: 07301229.6
(22) Date de dépôt: 12.07.2007
(51) Int. Cl.: C04B 28/18, F17C 11/00

(54) **Structure de garnissage à phase cristalline de récipients de gaz**

(30) Priorité: 26.07.2006 FR 0653119
(71) Demandeur: L'AIR LIQUIDE S.A., 75321 Paris Cédex 07 (FR)
(72) Inventeur: CANNET, Gilles, 95620, PARMAI (FR); DEL GALLO, Pascal, 91410, DOURDAN (FR); CHARTIER, Thierry, 87220, FEYTIAT (FR); BAUNE, Emmanuel, 95660, CHAMPAGNE S/OISE (FR); CANTONNET, Jérôme, 19100, BRIVE (FR); IMBAULT, Jean-François, 89100, SAINT CLEMENT (FR)
(74) Mandataire: Conan, Philippe Claude

(57) **Abrégé**

La présente invention concerne une structure de garnissage de récipient, caractérisée en ce qu'elle comprend une phase cristalline renfermant de 55 à 97% en poids de cristallites de xonotlite et de 3 à 45% en poids de cristallites de tobermorite. Elle concerne également un procédé de fabrication d'une telle structure de garnissage, ainsi que le récipient la contenant et son utilisation pour stocker des fluides tels que des gaz.

## Description

La présente invention a pour objet de nouvelles structures de garnissage de récipients, les récipients les contenant, ainsi que leur utilisation pour stocker des fluides tels que des gaz.

Il est connu d'utiliser des récipients sous pression contenant des gaz, tels que de l'acétylène, dissous dans un solvant, tel que de l'acétone, dans différentes applications médicales et artisanales, et notamment pour réaliser des opérations de soudage, brasage et chauffage en combinaison avec une bouteille d'oxygène.

Ces récipients sont habituellement garnis de matériaux de remplissage solides, destinés à stabiliser les gaz qu'ils contiennent, lesquels sont thermodynamiquement instables sous l'effet de variations de pression ou de température et donc susceptibles de se décomposer lors de leur stockage, leur transport et/ou leur distribution.

Ces matériaux doivent avoir une porosité suffisante pour faciliter l'absorption et la libération des gaz contenus dans le récipient. Ils doivent également être incombustibles, inertes vis-à-vis de ces gaz et présenter une bonne résistance mécanique. Ces matériaux sont classiquement constitués de masses céramiques silico-calciques poreuses, obtenues par exemple à partir d'un mélange homogène dans l'eau de chaux vive ou de lait de chaux et de silice (notamment sous forme de farine de quartz), comme décrit dans les documents WO-A-93/16011, WO-A-98/29682, EP-A-262031, pour former une pâtée qui est ensuite soumise à une synthèse hydrothermale. Précisément, la pâtée est introduite dans le récipient à garnir, sous vide partiel, lequel est ensuite soumis à un autoclavage en pression et en température, puis à une cuisson dans un four pour éliminer complètement l'eau et former une masse solide monolithique de composition CaₓSi_{y}O_{z}, _{w}H₂O présentant des structures cristallines de type tobermorite et xonotlite, avec une présence éventuelle résiduelle de quartz. Divers additifs peuvent être ajoutés à ces mélanges de l'art antérieur pour améliorer la dispersion de la chaux et de la silice et éviter ainsi la formation d'inhomogénéités structurales et les phénomènes de retrait observés lors du durcissement de la masse poreuse. Les matériaux de remplissage obtenus doivent en effet présenter une porosité homogène sans espaces vides dans lesquels des poches de gaz pourraient s'accumuler et entraîner des risques d'explosion.

Le document EP-A-264550 indique en outre qu'une masse poreuse contenant au moins 50%, voire au moins 65%, voire même au moins 75% en poids de phase cristalline (par rapport au poids de silicate de calcium) permet de satisfaire à la double exigence de résistance à la compression et au retrait aux températures de synthèse hydrothermale et de cuisson.

Il n'en demeure pas moins que les propriétés de soutirage des gaz piégés dans les masses poreuses de l'art antérieur sont à ce jour insuffisantes.

En effet, selon les conditions opératoires (température d'utilisation, débit de travail, quantité de gaz contenu dans la bouteille...), elles ne permettent pas toujours de soutirer le gaz qu'elles renferment en continu, à un débit élevé, pendant toute la durée nécessaire à certaines applications, notamment de soudage, avec un taux de restitution de gaz maximal, correspondant au rapport de la quantité de gaz utilisable à la quantité de gaz initialement stockée. Or, il serait souhaitable de pouvoir satisfaire à un débit de 200 l/h en continu pendant au moins 15 mn et à un débit de pointe de 400 l/h pendant au moins 4 mn, pour un taux de contenance en gaz supérieur ou égal à 50% au démarrage de l'essai (défini comme le rapport de la quantité de gaz présente à cet instant à la quantité de gaz initialement chargée dans le récipient), le récipient ayant un rapport diamètre/longueur compris entre 0,2 et 0,7, de préférence entre 0,35 et 0,5, pour une capacité en eau minimale de un litre et de préférence comprise entre 3 et 10 litres.

Cette insuffisance est notamment liée à la déperdition thermique associée à l'extraction du gaz hors du solvant qui peut s'avérer très préjudiciable au soutirage du gaz. Dans le cas d'une bouteille d'acétylène, par exemple, la consommation énergétique est de l'ordre de 600 Joules par gramme d'acétylène extrait du solvant. En pratique, il en résulte un refroidissement important de la bouteille au cours du soutirage, entraînant une plus grande solubilisation de l'acétylène dans le solvant et ainsi une baisse de pression se répercutant sur le débit de soutirage. Le débit finit par s'épuiser lorsque la pression en sortie de bouteille passe en deçà de la pression atmosphérique.

La phénomène mentionné précédemment est particulièrement accentué dans certaines conditions de basse température, par exemple en hiver ou dans des régions au climat froid, de débit de travail important, de longue durée de soutirage (la température finale de la bouteille pouvant être en certains endroits de 40°C inférieure à sa température initiale lors d'un soutirage prolongé), de volume de récipient et de quantité de gaz stockée.

En outre, les variations de température et de pression ne sont pas homogènes au sein du récipient, ce qui peut conduire à l'apparition de contraintes mécaniques susceptibles de dégrader la masse poreuse au cours du temps.

Aux difficultés de soutirage s'ajoutent donc des problèmes de résistance mécanique susceptibles d'avoir des répercussions sur la sécurité.

La présente invention permet de surmonter ces inconvénients de l'art antérieur en utilisant une structure de garnissage dont la composition chimique lui confère, en particulier, une conductivité thermique (λ), lorsqu'elle se trouve chargée en solvant, lui permettant de véhiculer les frigories générées au moment de l'extraction du gaz hors du solvant.

Plus précisément, la Demanderesse a maintenant montré que ces inconvénients de l'art antérieur pouvaient être surmontés en utilisant une structure de garnissage de récipients se présentant sous la forme de phases cristallines présentes dans des proportions particulières. Elle a également mis au point le procédé permettant l'obtention de cette structure de garnissage.

La présente invention a ainsi pour objet une structure de garnissage de récipient, caractérisée en ce qu'elle comprend une phase cristalline renfermant de 55 à 97% en poids de cristallites de xonotlite et de 3 à 45% en poids de cristallites de tobermorite.

La xonotlite est un silicate de calcium, de formule Ca₆Si₆O₁₇(OH)₂, qui présente des unités répétitives constituées de trois tétraèdres. Par ailleurs, la tobermorite est également un silicate de calcium, de formule Ca₅Si₆(O,OH)₁₈.5H₂O, cristallisé sous forme orthorhombique.

Dans la structure de garnissage selon l'invention, ces deux phases cristallines se présentent sous la forme d'arrangements cristallisés aciculaires ou aiguilles.

De préférence, au moins 50% en volume de ces aiguilles ont une longueur allant de 2 à 10 µm, et plus préférentiellement de 2 à 5 µm, et une épaisseur allant de 0,2 à 1 µm, et plus préférentiellement de 0,2 à 0,5 µm, par rapport au volume total des aiguilles de xonotlite et de tobermorite dans la structure de garnissage. La fraction d'aiguilles restante, qui représente moins de 50% en volume du matériau, est de préférence constituée d'aiguilles ayant une longueur allant de 0,5 à moins de 2 µm et une épaisseur allant de 0,01 à moins de 0,2 µm.

De préférence, ces aiguilles sont liées les unes aux autres par des "ponts" de sorte qu'elles ménagent entre elles un diamètre de pore D95 (diamètre auquel 95% en volume des pores ont un diamètre inférieur) supérieur ou égal à 0,4 µm et inférieur à 5 µm. En outre, la structure de garnissage a de préférence un diamètre moyen de pore D50 (diamètre auquel 50% en volume des pores ont un diamètre inférieur) supérieur ou égal à 0,4 µm et inférieur à 1,5 µm. Enfin, elle a avantageusement une porosité ouverte totale comprise entre 80% et 90%. Ces valeurs peuvent toutes être mesurées par porosimétrie au mercure.

De préférence, la structure de garnissage selon l'invention comprend au moins 70% en poids, et plus préférentiellement au moins 80% en poids, voire au moins 90% en poids, de phase cristalline renfermant des cristallites de xonotlite et de tobermorite. Elle peut en outre éventuellement contenir une ou plusieurs phases intermédiaires à base de Ca, Si, O et H, de formule CaₓSi_{y}Oz,w.H₂O, telles que la foshagite, du carbonate de calcium et de la silice. L'ensemble de ces phases intermédiaires peut représenter au total de 0 à 15%, de préférence de 0 à 10% et plus préférentiellement de 0 à 5% du poids de la phase cristalline présente dans la structure de garnissage (y compris les cristallites de xonotlite et de tobermorite). Le carbonate de calcium et la silice peuvent chacun représenter de 0 à 5% du poids total de ces phases cristallines, la quantité de cette dernière étant de préférence inférieure à 3% en poids.

Comme cela ressort de la partie expérimentale de cette demande, le recours à une structure de garnissage comprenant des cristallites de xonotlite et de tobermorite dans les proportions indiquées précédemment permet d'atteindre le débit de soutirage recherché tout en satisfaisant aux exigences requises en matière de sécurité et de résistance mécanique.

Outre la phase cristalline décrite précédemment, la structure de garnissage selon l'invention peut comprendre des fibres choisies avantageusement parmi les fibres synthétiques à base de carbone, telles que décrites notamment dans le document US-A-3,454,362, les fibres de verre alcalino-résistantes, telles que décrites notamment dans le document US-A-4,349,643, les fibres de cellulose partiellement délignifiées, telles que décrites notamment dans le document EP-A-262031, et leurs mélanges, sans que cette liste ne soit limitative. Ces fibres sont utiles notamment en tant que matériaux de renfort, pour améliorer la résistance aux chocs de la structure de garnissage, et permettent également d'éviter les problèmes de fissuration au séchage de la structure. Ces fibres peuvent être utilisées telles quelles ou après traitement de leur surface.

La structure de garnissage peut en outre inclure des agents dispersants et/ou des liants, tels que les dérivés de cellulose, en particulier la carboxyméthylcellulose, l'hydroxypropylcellulose ou l'éthylhydroxyéthylcellulose, des polyéthers, tels que le polyéthylène glycol, des argiles synthétiques de type smectite, de la silice amorphe de surface spécifique avantageusement comprise entre 150 et 300 m²/g, et leurs mélanges, sans que cette liste ne soit limitative.

De préférence, la structure de garnissage contient des fibres, en particulier des fibres de carbone et/ou de verre et/ou de cellulose. La quantité de fibres est avantageusement inférieure à 55% en poids, par rapport à l'ensemble des précurseurs solides mis en oeuvre dans le procédé de fabrication de la structure de garnissage. Elle est de préférence comprise entre 3 et 20% en poids.

La structure de garnissage selon l'invention a de préférence une résistance à la compression supérieure ou égale à 15 kg/cm², soit 1,5 MPa, plus préférentiellement supérieure à 20 kg/m², soit 2 MPa. La résistance mécanique à la compression peut être mesurée par prélèvement d'un cube de 100 x 100 mm² dans la structure de garnissage et application sur la face supérieure de celui-ci d'une force en pression tandis qu'elle est maintenue contre une plaque métallique horizontale. Cette force correspond à la pression (en kg/cm² ou MPa) à partir de laquelle la matière commence à se fissurer.

Elle présente en outre de préférence une conductivité thermique d'environ 0.04 à 0.10 W/m/°K.

La présente invention a également pour objet un procédé de fabrication de la structure de garnissage conduisant à la cristallisation souhaitée et comprenant les étapes successives consistant :
- à calciner à une température d'au moins 850°C pendant au moins une heure des pavés de calcaire tels qu'au moins 90% en poids ont des dimensions de 1 à 15 mm, ledit calcaire ayant une pureté d'au moins 92% en poids et une porosité ouverte allant de 0 à 25%, pour obtenir des particules de chaux vive,
- à mélanger lesdites particules, en milieu aqueux, à de la silice et éventuellement à d'autres composés, pour obtenir une pâtée,
- à soumettre ladite pâtée à une synthèse hydrothermale à une température allant d'environ 170 à 300°C, pour obtenir une masse céramique, et
- à sécher ladite masse céramique à une température de 300 à 450°C pendant une durée de 40 à 200 heures.

Par «pureté», on entend le pourcentage en poids de carbonate de calcium dans le calcaire.

Il est bien entendu que ce procédé peut comprendre d'autres étapes que celles mentionnées ci-dessus, qui peuvent être des étapes préliminaires, intermédiaires ou supplémentaires à celles-ci.

Le procédé selon l'invention met en oeuvre, dans sa première étape, des pavés de calcaire de 0.1 à 15 mm et de préférence de 1 à 12 mm. Il a été déterminé que ces valeurs leur permettaient d'être calcinés à coeur dans des conditions relativement simples et d'obtenir, après calcination, une granulométrie de la chaux allant de 0,1 à 15 mm, garantissant à celle-ci une bonne réactivité dans la mise en oeuvre de la seconde étape du procédé (mesurée conformément à la norme NF EN 459-2), sans risque excessif d'hydratation et/ou carbonatation qui pourrait résulter du mode de stockage de la chaux après calcination et qui, in fine, pourrait affecter la qualité de la structure de garnissage. Ces pavés peuvent être obtenus par concassage de blocs de calcaire de plus grandes dimensions et tamisage subséquent. Ils ont une pureté (teneur en CaCO₃ par rapport au poids total de calcaire) d'au moins 92% en poids et de préférence d'au moins 95% en poids, voire d'au moins 97% en poids, qui limite la présence d'impuretés susceptibles d'affecter la synthèse hydrothermale à partir des précurseurs des structures cristallines décrites précédemment. Le calcaire utilisé selon le procédé de l'invention renferme ainsi de préférence moins de 6% en poids de carbonate de magnésium et de silice et moins de 1% en poids d'alumine, d'oxyde de fer, d'oxyde de manganèse, d'autres oxydes, notamment de potassium, sodium, titane et d'impuretés telles que le soufre ou le phosphore. Enfin, la porosité ouverte du calcaire, mesurée par porosimétrie au mercure, va de 0 à 25% et est de préférence comprise entre 5 et 25%, de façon à permettre à la fois à l'eau d'imprégner correctement la chaux qui sera formée (en vue de l'éteindre) et au dioxyde de carbone de s'échapper lors de la formation de la chaux par calcination du calcaire.

L'homme du métier saura identifier les carrières ou veines exploitées permettant l'obtention des pavés de calcaire précités.

Les conditions de température, de durée et d'atmosphère mises en oeuvre dans cette étape permettent en outre de calciner totalement le calcaire sans induire de frittage (densification) des particules élémentaires qui aurait pour effet de fermer la porosité et donc de réduire la réactivité de la chaux obtenue. Il a notamment été observé que, pour un temps de palier fixé à deux heures, la température ne devait pas être inférieure à 800°C ni supérieure à 1100°C. En outre, dans le cas où la température de calcination est fixée à 1100°C, le temps de palier ne devra pas être substantiellement supérieur à une heure. On comprend donc que l'homme du métier pourra ajuster la température et la durée de cuisson du calcaire dans une certaine mesure, pour autant que la température soit supérieure à 850°C pendant au moins une heure. Un ajustement pourra en effet être rendu nécessaire en fonction du type particulier de four, de la quantité de calcaire traitée et de la disposition (telle que l'épaisseur de couches) du produit dans le four. Une température d'environ 900°C pendant environ trois heures est préférée. A cette température, en effet, il a été observé que la cinétique de frittage était relativement lente et que le temps de palier n'avait qu'un faible impact sur la réactivité. La cuisson à cette température permet donc d'ajuster la durée de calcination aux contraintes industrielles.

La première étape du procédé selon l'invention permet ainsi d'obtenir une chaux vive ayant une réactivité satisfaisante et apte à former, après synthèse hydrothermale, la phase cristalline recherchée. De préférence, la chaux vive obtenue présente une teneur totale en eau et dioxyde de carbone inférieure à 2% en poids.

Dans la seconde étape du procédé selon l'invention, la chaux vive obtenue à l'issue de la première étape est mélangée à de la silice. Celle-ci peut être amorphe ou cristalline et est de préférence telle que sa pureté est d'au moins 90% (teneur en poids de SiO₂) et qu'elle renferme au moins 90% en poids de particules élémentaires inférieures à 1 µm, de façon à ce que sa réactivité avec la chaux soit la plus grande possible. Des silices de ce type sont couramment disponibles dans le commerce.

La chaux et la silice sont de préférence mélangées l'une à l'autre dans un rapport molaire CaO:SiO₂ de 0,8 à 1. En outre, le ratio eau/précurseurs solides (chaux + silice + éventuellement fibres) est de préférence compris entre 2 et 60, plus préférentiellement entre 3 et 25.

Il peut en outre être utile d'ajouter un dispersant au mélange pour améliorer son homogénéité. Un lubrifiant tel qu'un poly(oxyéthylène) peut également être prévu.

La troisième étape du procédé selon l'invention consiste à soumettre le mélange issu de la seconde étape (ou "pâtée") à une synthèse hydrothermale à une température comprise entre environ 170 et 300°C, préférentiellement entre 180 et 250°C, pendant une durée allant, selon le volume du récipient à garnir, de 10h à 70h, par exemple voisine de 40 ou 50 heures pour un récipient de volume en eau égal à 6 litres. Selon une première forme d'exécution, la synthèse peut être réalisée en introduisant la pâtée dans le récipient ouvert qu'elle est destinée à garnir, puis en plaçant celui-ci dans un four autoclave soumis à une pression comprise entre 5.10⁵ Pa et 25.10⁵ Pa (5 et 25 bars), préférentiellement entre 7.10⁵ Pa et 15.10⁵ Pa (7 et 15 bars). Selon une deuxième forme d'exécution, la synthèse hydrothermale peut être réalisée en plaçant la pâtée dans le récipient qu'elle est destinée à garnir, en fermant celui-ci avec un bouchon équipé d'un système de régulation de pression (tel qu'une valve), en pressurisant le récipient à une pression allant de la pression atmosphérique à 25.10⁵ Pa (25 bars), de préférence entre 7.10⁵ Pa et 15.10⁵ Pa (7 et 15 bars), puis en plaçant ce récipient dans un four non pressurisé.

La quatrième étape du procédé ou étape de séchage a pour fonction non seulement d'évacuer l'eau résiduelle, mais aussi de conférer à la masse traitée une structure majoritairement cristalline. Cette opération est réalisée dans un four traditionnel électrique (qui peut ou non être le même que celui utilisé pour l'opération de synthèse hydrothermale), à la pression atmosphérique, c'est-à-dire après que les bouchons et valves aient été retirés du sommet des récipients dans le second exemple de synthèse hydrothermale décrit auparavant.

L'invention a également pour objet l'utilisation d'une structure de garnissage telle que décrite précédemment, pour stocker des fluides tels que des gaz.

Elle a encore pour objet un récipient renfermant une structure de garnissage telle que décrite précédemment, lequel récipient est apte à contenir et distribuer un fluide.

Ce récipient comprend habituellement une enveloppe métallique renfermant la structure de garnissage décrite précédemment. L'enveloppe métallique peut être constituée d'un matériau métallique tel que l'acier, par exemple un acier à carbone normalisé P265NB selon la norme NF EN10120, dont l'épaisseur le rend apte à résister au moins à la pression de synthèse hydrothermale sans risque d'accident et apte à résister à une pression d'épreuve de 60 bar (6 MPa), valeur normative réglementaire pour le conditionnement de l'acétylène dans les conditions décrites précédemment. Le récipient est en outre habituellement de forme cylindrique et généralement pourvu de moyens de fermeture et d'un régulateur de pression. Ce récipient a de préférence un rapport diamètre / longueur compris entre 0,2 et 0,7, plus préférentiellement entre 0,35 et 0,5, et une capacité en eau minimale d'un litre. Habituellement, un tel récipient aura la forme d'une bouteille.

Les fluides stockés dans la structure de garnissage selon l'invention peuvent être des gaz ou des liquides.

Comme gaz, on peut citer les gaz comprimés purs ou en mélanges sous forme gazeuse ou liquide, tels que l'hydrogène, les hydrocarbures gazeux (alcanes, alcynes, alcènes), l'azote et l'acétylène, et les gaz dissous dans un solvant tels que l'acétylène et les mélanges acétylène-éthylène ou acétylène-éthylène-propylène, dissous dans un solvant tel que l'acétone ou le diméthylformamide (DMF).

Comme liquides, on peut notamment citer les précurseurs organométalliques tels que les précurseurs de Ga et In, utilisés en particulier dans l'électronique, ainsi que la nitroglycérine.

En particulier, le récipient selon l'invention contient de l'acétylène dissous dans du DMF ou de l'acétone.

L'invention sera maintenant décrite plus en détail par référence aux exemples suivants, qui sont donnés à titre purement illustratif et nullement limitatif.

### EXEMPLES

### Exemple 1 : préparation de structures de garnissage selon l'invention

### 1A. Calcination du calcaire

Un calcaire ayant les caractéristiques suivantes a été utilisé :
Composition (en poids) : 97, 50% CaCO₃, 1,00 % MgCO₃, 0, 8% SiO₂, 0,16% Al₂O₃, 0,5% Fe₂O₃
Granulométrie : 5 à 10 mm
Porosité : 18,9%
D50 : 0,93 µm

Environ 40 kg de ce calcaire ont été étalés sur quatre soles supportant chacune 10 kg de ce produit, sur une épaisseur de 3 cm, puis calcinés dans un four électrique sous atmosphère d'air sec, réglé à une vitesse de montée en température de 5°C/min jusqu'à 900°C puis maintenu 5h à cette température. La ventilation a été activée pendant la montée en température et le palier, puis coupée au refroidissement, qui était de type non forcé.

### 1B. Préparation de la pâtée

La chaux vive obtenue à l'étape 1A a été éteinte à l'aide d'eau chaude (43°C), puis mélangée dans l'eau à divers adjuvants, pour obtenir la pâtée ayant la composition indiquée dans le Tableau 1 ci-dessous.

**Tableau 1**

| Composition de la pâtée | |
|---|---|
| Constituant | Quantité |
| CaO | 172 g |
| Eau à 43°C | 800 g |
| Eau à 20°C | 458 g |
| Acide phosphorique | 4 g |
| Poly(oxyéthylène) | 0,018 g |
| Silice micronique | 180 g |
| Fibres de verre | 24,6 g |

### 1C. Synthèse hydrothermale et séchage

La pâtée obtenue à l'étape 1B a été injectée dans des bouteilles non pressurisées en acier ayant une capacité en eau de 5,8 litres, une hauteur totale de 485 mm, un diamètre extérieur de 140 mm et un diamètre intérieur de 136 mm, en veillant à ce que d'éventuelles bulles au sein de la pâtée soient évacuées hors des récipients pendant et après le remplissage. Les bouteilles ont été mises sous vide primaire lors du remplissage. Une fois remplies, les bouteilles ont été fermées à l'aide de valves dont l'ouverture était tarée à 1,4 MPa, puis placées dans un four où elles ont été chauffées à une température de consigne et pendant une durée indiquées dans le Tableau 2 ci-après, sous une pression moyenne de 14 bars (1,4 Mpa) sur la durée de la synthèse hydrothermale.

Les bouteilles ont ensuite été séchées dans un second four après avoir ôté les bouchons et valves, à une température de consigne et pendant une durée indiquées dans le Tableau 2 ci-après, à pression atmosphérique.

**Tableau 2**

| Conditions de synthèse et de séchage des structures de garnissage selon l'invention | | | | |
|---|---|---|---|---|
| Bouteille | Synthèse hydrothermale | | Séchage | |
| | Température (°C) | Durée (h) | Température (°C) | Durée (h) |
| A | 196 | 50 | 370 | 100 |
| B | 180 | 50 | 370 | 100 |
| C | 196 | 50 | 370 | 75 |
| D | 190 | 50 | 360 | 80 |

Il a été vérifié que les bouteilles garnies ainsi obtenues satisfaisaient aux exigences normatives et réglementaires d'usage et de sécurité, selon les tests d'agrément habituellement pratiqués (porosité à l'acétone, essai à température élevée et test de retour de flamme selon la norme ISO 3901-1:2000, inflammabilité selon la norme ISO 3807-1).

### Exemple 2 : caractéristiques structurales des structures de garnissage selon l'invention

Les bouteilles produites à l'Exemple 1 ont été découpées transversalement. Il n'a été observé aucune fissure ou craquelure des structures de garnissage qu'elles contenaient.

Ces structures de garnissage ont été analysées par diffraction X.

Il a été observé que ces structures présentaient la composition chimique indiquée au Tableau 3 ci-après :

**Tableau 3**

| Composition chimique des structures de garnissage selon l'invention | | | | |
|---|---|---|---|---|
| Bouteille | CaCO₃ | SiO₂ | Tobermorite | Xonotlite |
| A | 3-4% | 0-1% | 3-4% | 92-93% |
| B | 0-3% | 1-2% | 5-10% | 88-90% |
| C | - | - | 10-20% | >80% |
| D | 0-5% | - | 30-40% | >55% |

Les structures de garnissage fabriquées selon le procédé décrit à l'Exemple 1 présentaient donc toutes la composition chimique attendue.

### Exemple 3 : test de résistance mécanique

Les structures de garnissage obtenues à l'Exemple 2 ont été soumises à un test de résistance à la compression. Pour ce faire, un cube de 100 x 100 mm² a été prélevé dans chaque structure de garnissage et il a été appliqué sur la face supérieure de celui-ci une force tandis qu'elle était maintenue contre une plaque métallique horizontale. La force correspondant à la pression (en kg/cm² ou MPa) à partir de laquelle la matière commençait à se fissurer a été enregistrée. Cette valeur, qui est indiquée dans le Tableau 4 ci-après, correspond à la résistance à la compression du matériau.

**Tableau 4**

| Test de résistance mécanique | |
|---|---|
| Bouteille | Résistance mécanique (kg/cm²) |
| A | 26 |
| B | 21 |
| C | 27 |
| D | 24 |

Il ressort de ce tableau que la résistance mécanique des structures de garnissage selon l'invention est conforme aux exigences de tenue dans le temps (durabilité) et sécurité requises.

### Exemple 4 : test de soutirage

Les bouteilles fabriquées comme décrit à l'Exemple 1 ont été remplies d'acétone puis d'acétylène selon un taux de chargement de 0,524, c'est-à-dire à raison de 0,888 kg de gaz au total (incluant la quantité de gaz de saturation dans le solvant, plus la quantité de gaz utile) et 1,694 kg de solvant.

Des tests de débit ont ensuite été réalisés, en soutirant le gaz et en le régulant à un débit continu de 400 1/h à une température ambiante de 20°C. On a mesuré le pourcentage de gaz restitué par rapport à la quantité initiale de gaz stockée dans la bouteille. Les résultats sont rassemblés dans le Tableau 5 ci-après.

**Tableau 5**

| Test de soutirage de gaz | |
|---|---|
| Bouteille | Taux de restitution de gaz |
| A | 45% |
| B | 32% |
| C | 46% |
| D | 48% |

Comme il ressort du Tableau 5, les bouteilles selon l'invention ont des taux de restitution de gaz permettant d'envisager leur utilisation prolongée (généralement pendant au moins 40 minutes, à pleine contenance de la bouteille et à une température extérieure de 18°C), à un débit de 400 litres par heure.

En outre, il n'a pas été observé de crachement de solvant.

### Exemple 5 : exemple comparatif

On a préparé trois bouteilles ayant un volume en eau de 5.8 litres comme décrit à l'Exemple 1, excepté en ce qui concerne les conditions de synthèse hydrothermale et de séchage, qui étaient telles qu'indiquées au Tableau 6 ci-après. La composition chimique des structures de garnissage contenues dans ces bouteilles est également présentée au Tableau 6.

**Tableau 6**

| Conditions de fabrication et composition chimique de structures de garnissage comparatives | | | | | | | | |
|---|---|---|---|---|---|---|---|---|
| Bouteille | Synthèse hydrothermale | | Séchage | | Composition chimique | | | |
| | Temp. (°C) | Durée (h) | Temp. (°C) | Durée (h) | CaCO₃ | SiO₂ | Tobermorite | Xonotlite |
| E | 160 | 50 | 350 | 100 | 1-2% | - | 1-2% | 96-97% |
| F | 196 | 50 | 650 | 100 | - | - | - | >99% |
| G | 196 | 50 | 370 | 30 | 1-2% | 1-2% | 50-60%* | <35% |

| | | | | | | | | |
|---|---|---|---|---|---|---|---|---|
| * incluant d'autres phases cristallines non identifiées | | | | | | | | |

Ces bouteilles ont été soumises aux tests présentés aux Exemples 2 à 4. Les résultats de ces tests sont rassemblés dans le Tableau 7 ci-dessous :

**Tableau 7**

| Tests comparatifs | | | |
|---|---|---|---|
| Bouteille | Résistance mécanique (kg/cm²) | Performances en sécurité | Taux de restitution de gaz |
| E | 25 | Conformes | 15% |
| F | 17 | Non conformes | Non mesurées |
| G | 12 | Non conformes | Non mesurées |

Il ressort de ce Tableau que les structures de garnissage non conformes à l'invention, car présentant soit moins de 3% de tobermorite, soit moins de 55% ou plus de 97% de xonotlite, ne permettaient pas de satisfaire aux exigences de sécurité requises et/ou de performances de soutirage recherchées et/ou ne présentaient pas une résistance mécanique suffisante (supérieure ou égale à 15 kg/cm²).

## Revendications

1. Structure de garnissage de récipient, **caractérisée en ce qu'**elle comprend une phase cristalline renfermant de 55 à 97% en poids de cristallites de xonotlite, de 3 à 45% en poids de cristallites de tobermorite et une ou plusieurs phases intermédiaires en une proportion allant jusqu'à 15% en poids.

2. Structure de garnissage selon la revendication 1, **caractérisé en ce qu'**elle renferme au moins 70% en poids de phase cristalline.

3. Structure de garnissage selon l'une des revendications 1 ou 2, **caractérisée en ce que** les phases intermédiaires sont choisies parmi le carbonate de calcium, la silice et la foshagite.

4. Structure de garnissage selon l'une quelconque des revendications 1 à 3, **caractérisée en ce qu'**elle renferme en outre des fibres de carbone et/ou de verre et/ou de cellulose.

5. Procédé de fabrication d'une structure de garnissage selon l'une quelconque des revendications 1 à 4, **caractérisé en ce qu'**il comprend les étapes successives consistant :
• à calciner à une température d'au moins 850°C pendant au moins une heure des pavés de calcaire tels qu'au moins 90% en poids ont des dimensions de 1 à 15 mm, ledit calcaire ayant une pureté d'au moins 92% en poids et une porosité ouverte allant de 0 à 25%, pour obtenir des particules de chaux vive,
• à mélanger lesdites particules, en milieu aqueux, à de la silice et éventuellement à d'autres composés, pour obtenir une pâtée,
• à soumettre ladite pâtée à une synthèse hydrothermale à une température allant de 170 à 300°C, pour obtenir une masse céramique, et
• à sécher ladite masse céramique à une température de 300 à 450°C pendant une durée de 40 à 200 heures.

6. Procédé selon la revendication 5, **caractérisé en ce qu'**au moins 90% en poids desdits pavés de calcaire ont une dimension de 1 à 12 mm.

7. Procédé selon la revendication 5 ou 6, **caractérisé en ce que** ledit calcaire a une pureté d'au moins 95% en poids, voire d'au moins 97% en poids.

8. Procédé selon l'une quelconque des revendications 6 à 8, **caractérisé en ce que** ledit calcaire a une porosité ouverte comprise entre 0 et 25%, déterminée par porosimétrie au mercure.

9. Procédé selon l'une quelconque des revendications 6 à 9, **caractérisé en ce que** la synthèse hydrothermale est effectuée à une température comprise entre 180 et 250°C.

10. Récipient renfermant une structure de garnissage telle que définie dans l'une quelconque des revendications 1 à 4, lequel récipient a la forme d'une bouteille apte à contenir et distribuer un fluide.

11. Récipient selon la revendication 10, **caractérisé en ce qu'**il contient de l'acétylène dissous dans un solvant, en particulier du DMF ou de l'acétone.

12. Utilisation d'une structure de garnissage selon l'une quelconque des revendications 1 à 4 ou d'un récipient selon l'une des revendications 10 ou 11 pour stocker de l'acétylène.
